# EUROPÄISCHE PATENTSCHRIFT

(11) **EP 1 040 973 B1**
(45) Veröffentlichungstag und Bekanntmachung des Hinweises auf die Patenterteilung: **20.04.2005**
(21) Anmeldenummer: 00104938.6
(22) Anmeldetag: 08.03.2000
(51) Int. Cl.: B60S 1/38, B60S 1/48

(54) **Elektrisch beheizter Schlauch für Scheibenwaschanlage**
Electrically heated hose for windscreen cleaning device
Tuyau chauffé électriquement pour dispositif de lavage de vitres

(30) Priorität: 31.03.1999 DE 19914630
(43) Veröffentlichungstag der Anmeldung: 04.10.2000
(73) Patentinhaber: A. Raymond & Cie, F-38028 Grenoble-Cédex (FR)
(72) Erfinder: Wandels, Philippe, 38000 Grenoble (FR)
(74) Vertreter: Rüttgers, Joachim, Dr.

(56) Entgegenhaltungen:
- EP-A- 0 724 992
- WO-A-98/26965
- GB-A- 2 044 601
- GB-A- 2 121 681
- US-A- 5 327 614
- US-A- 5 791 377

## Beschreibung

Die Erfindung betrifft einen elektrisch beheizbaren Schlauch für Scheibenwaschanlagen von Kraftfahrzeugen gemäß dem Oberbegriff des Anspruches 1.

Ein derartiger beheizbarer Schlauch ist aus US-A-5,372,614 bekannt. Bei dem vorbekannten Schlauch für Scheibenwaschanlagen von Kraftfahrzeugen sind elektrischen Verbindungen von längsverlaufend zu einer Schlauchwand des Schlauches verlaufenden und in diese eingebetteten Heizdrähte über elektrische Kupplungen mit zu Spritzdüsen führenden elektrischen Leitern verbunden, um ein in Bereiche der Spritzdüsen angeordnetes Heizelement mit elektrische Energie zu versorgen. Auch wenn dadurch im Bereich der Spritzdüsen zum Vermeiden von Vereisungen Wärme erzeugbar ist, führt dieser Aufbau zu einem verhältnismäßig hohen Fertigungs- und Montageaufwand.

Ein weiterer beheizbarer Schlauch ist beispielsweise aus EP-A-0 456 024 bekannt. Bei der dort gezeigten Waschanlage sind die längs des Schlauchs verlaufenden Heizdrähte lose im Innern des Schlauchs verlegt, was naturgemäß mit einem erheblichen Montageaufwand verbunden ist.

Aufgabe der Erfindung ist es, einen elektrisch beheizbaren Schlauch der eingangs genannten Art anzugeben, mit dem mit einem relativ geringen Fertigungs- und Montageaufwand auch in einem Düsenkörper verlaufende Düsenkanäle effizient beheizbar sind.

Diese Aufgabe wird bei einem Schlauch der eingangs genannten Art erfindungsgemäß mit den kennzeichnenden Merkmalen des Anspruches 1 gelöst.

Dadurch, daß die Heizdrähte zu einer Schlinge vereinigt und diese in einem in einen Düsenkörper einsetzbaren Heizstab eingebettet sind, läßt sich der Düsenkörper ohne zusätzlichen elektrischen Anschlüsse beheizen und ist damit mit geringem Fertigungsaufwand herstellbar.

In der Zeichnung sind zwei Ausführungsbeispiele dargestellt, welche nachfolgend näher beschrieben werden. Dabei zeigen Figur 6 bis Figur 11 ein Ausführungsbeispiel der geschützten Erfindung. Es zeigen:
- **Fig. 1**: einen Wasserschlauch mit integrierten Heizdrähten und elektrischen Anschlußsteckem an beiden Enden,
- **Fig. 2**: ein langgestreckter, zweiteiliger Düsenkörper in Seitenansicht mit im Düsenkörper integrierter Heizschlinge,
- **Fig. 3**: der Wasserschlauch gemäß Figur 1 mit angeschlossenem Düsenkörper gemäß Figur 2 und gleichzeitiger elektrischer Verbindung der Heizdrähte in Seitenansicht,
- **Fig. 4**: der gleiche Wasserschlauch mit angeschlossenem Düsenkörper in Draufsicht,
- **Fig. 5**: der extrudierte Wasserschlauch mit integrierten Heizdrähten im vergrößerten Querschnitt gemäß Linie V - V in Figur 1,
- **Fig. 6**: eine erfindungsgemäße Ausführungsform des Wasserschlauchs, bei dem die am düsenseitigen Ende freigelegten Heizdrähte von Kunststoff umspritzt und zu einem Heizstab geformt sind,
- **Fig. 7**: ein Düsenkörperoberteil mit Blick auf die Düsenkanäle und die Aussparung zur Aufnahme des Heizstabes gemäß Figur 6,
- **Fig. 8**: einen Wasserschlauch mit an den freigelegten Heizdrähten angespritztem Heizstab in Seitenansicht,
- **Fig. 9**: ein Düsenkörperunterteil mit Blick auf die Aussparung zur Aufnahme des Heizstabes,
- **Fig. 10**: den zusammengebauten und an den beheizten Wasserschlauch angeschlossenen Düsenkörper und
- **Fig. 11**: einen Querschnitt durch den zusammengebauten Düsenkörper mit eingesetztem Heizstab gemäß Linie XI-XI in Fig. 10

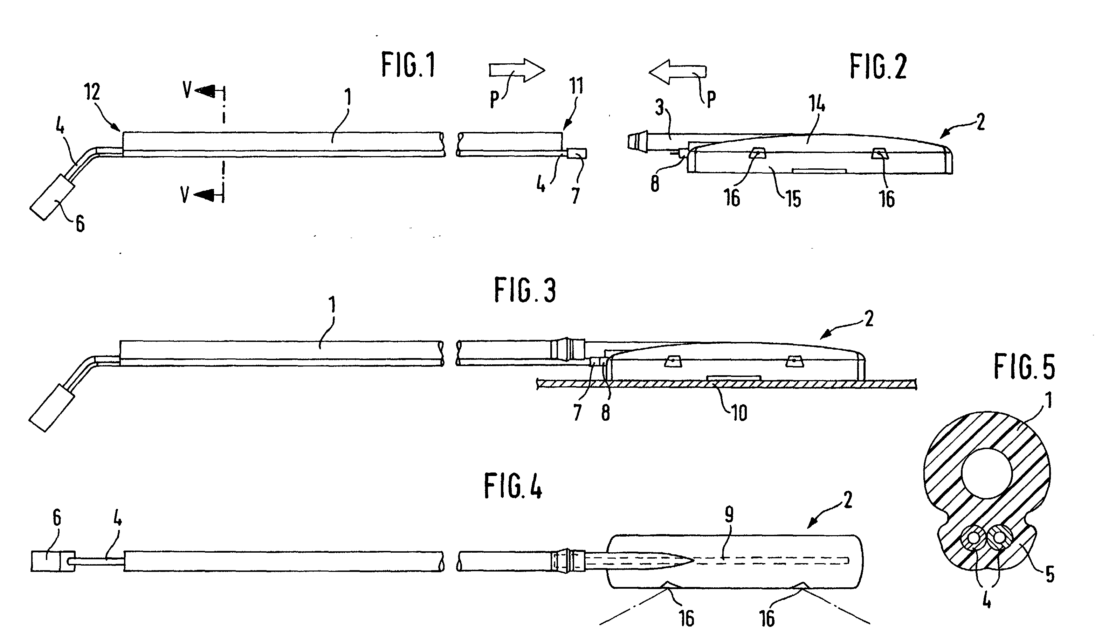

Figur 1 zeigt einen Schlauch 1 zum Einsatz bei Scheibenwaschanlagen von Kraftfahrzeugen. Derartige Scheibenwaschanlagen umfassen üblicherweise einen Wassertank für das Spritzwasser, eine elektrisch ansteuerbare Wasserpumpe, eine oder mehrere Spritzdüsen 2 sowie die zugehörigen Schlauchleitungen 1, die im vorliegenden Falle beheizbar sind. Der Schlauch 1 wird an seinem einen Ende 12 an die nicht dargestellte Pumpe eines Wassertanks angeschlossen und an seinem anderen Ende 11 mit dem Anschlußstutzen 3 der Spritzdüse 2 (vgl. Fig.2) in Richtung der Pfeile P zusammengesteckt.

Längs des Schlauches 1 verlaufen zwei Heizdrähte 4, welche ― wie aus Figur 5 ersichtlich ― in einer entsprechend verdickten Schlauchwand 5 vollkommen eingeformt sind. Die Heizdrähte 4 sind an ihren beiden Enden mit elektrischen Anschlußsteckern 6 und 7 versehen, von denen der eine Stecker 6 mit einer nicht dargestellten Stromquelle und der andere Stecker 7 mit dem aus der Spritzdüsen 2 vorstehenden Ende 8 einer darin verlegten Heizschlinge 9 zusammengesteckt werden. Die Heizschlinge 9 kann dadurch erzeugt werden, daß die freigelegten Heizdrähte 4 an ihren Enden 19 zusammengelötet werden (vgl. Fig. 4).

Der aus zwei Teilen zusammengebaute Düsenkörper 14, 15 kann, wie in Figur 3 angedeutet, beispielsweise durch Verkleben auf einem Wischerbügel 10 befestigt werden. Der erfindungsgemäß beheizbare Schlauch 1 läßt sich ebenso auch mit einfachen Spritzdüsen verbinden, welche beispielsweise auf der Kühlerhaube vor der Frontscheibe angeordnet sind.

Der Stecker 7 ist auf den freigelegten Enden der Heizdrähte 4 in solchem Abstand vom abgeschnittenen Ende 11 des Schlauches 1 angeordnet, daß dieser beim Aufstecken des Schlauches 1 auf den Stutzen 3 des Düsenkörpers 14, 15 gleichzeitig mit dem Stecker 8 der Heizschlinge 9 verbindbar ist.

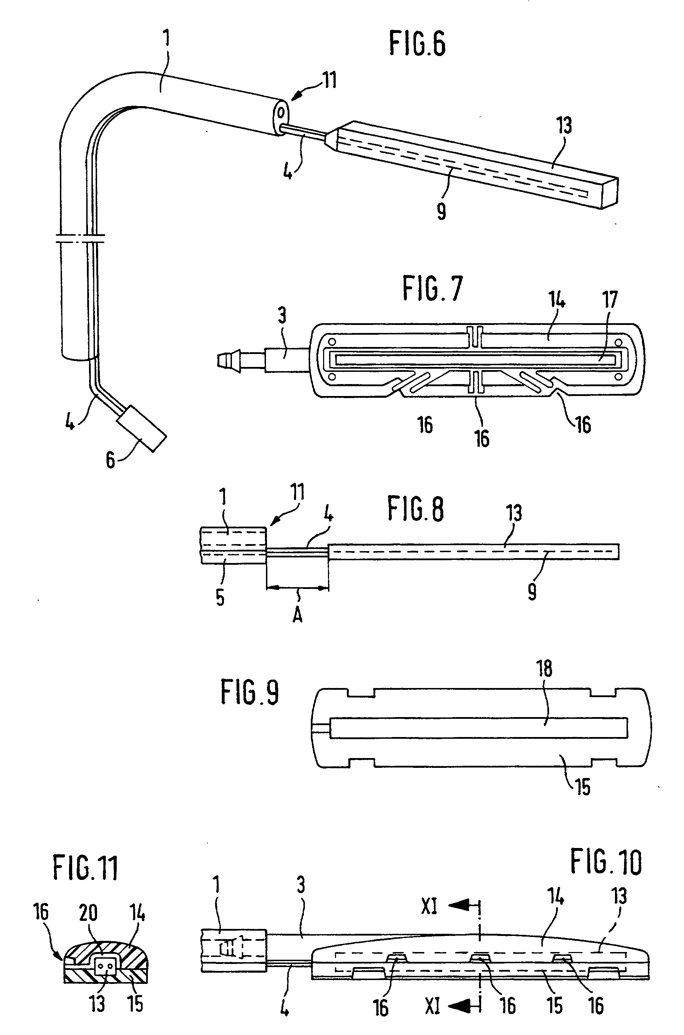

Figur 6 zeigt einen Wasserschlauch in perspektivischer Darstellung, bei dem die am düsenseitigen Ende 11 freigelegten Heizdrähte 4 vom gleichen Kunststoff wie der für den Schlauch verwendete Kunststoff umspritzt und zu einem Heizstab 13 geformt sind, welcher in der in den Figuren 7 bis 11 gezeigten Weise in den zweiteiligen Düsenkörper 14, 15 einsetzbar ist.

Hierbei zeigt Figur 7 ein Düsenkörperoberteil 14 mit Blick auf die Düsenkanäle 16 sowie eine längliche Aussparung 17 zur Aufnahme der einen Hälfte des Heizstabes 13.

Figur 8 zeigt das Schlauchende 11 mit freigelegten, ummantelten Heizdrähten 4, deren blanke Drahtschlinge 9 im Abstand A von dem Schlauchende 11 mittels Kunststoff zu einem Heizstab 13 umspritzt ist, dessen Querschnitt vorzugsweise rechteckig ist.

Figur 9 zeigt das zugehörige Düsenkörperunterteil 15 in Draufsicht mit Blick auf die Aussparung 18 zur Aufnahme der anderen Hälfte des Heizstabes 13.

Der Zusammenbau des Düsenkörpers 14, 15 ergibt sich aus den Figuren 10 und 11, wobei Figur 10 eine Seitenansicht des Düsenkörpers 14/15 mit Blick auf die Düsenkanäle 16 zeigt und Figur 11 einen Querschnitt durch das Oberteil 14, den Heizstab 13 und das Unterteil 15 nach dem Zusammenfügen darstellt.

In Figur 11 ist ferner der um den Heizstab 13 herumgeführte Wasserkanal 20 zu sehen, welcher das in den Anschlußstutzen 3 eingeleitete Spritzwasser hin zu den Düsenkanälen 16 leitet.

Durch die längs des Schlauches 1 verlaufenden Heizdrähte 4 und die Beheizung des Düsenkörpers 14/15 mittels einer Heizschlinge 9 bzw. eines Heizstabes 13 wird sichergestellt, daß das Spritzwasser auch bei Außentemperaturen unter Null ständig auf einer Temperatur über dem Gefrierpunkt gehalten wird.

## Patentansprüche

1. Elektrisch beheizbarer Schlauch für Scheibenwaschanlagen von Kraftfahrzeugen, bei dem zwei mit elektrischen Anschlüssen versehene Heizdrähte (4) längsverlaufend zu einer Schlauchwand (5) des Schlauches (1) angeordnet und in die Schlauchwand (5) vollkommen eingeformt sind, wobei der Schlauch (1) an seinem einen Ende an die Wasserpumpe anschließbar und an seinem anderen Ende mit den Spritzdüsen der Waschanlage verbindbar ist, **dadurch gekennzeichnet, daß** die am vorderen Schlauchende (11) freigelegten Heizdrähte (4) zu einer Schlinge (9) vereinigt, vom gleichen Kunststoffmaterial umspritzt und zu einem Heizstab (13) geformt sind, welcher in einen zweiteiligen Düsenkörper (14, 15) einsetzbar ist.

## Claims

1. Electrically heatable hose for windscreen washer units of motor vehicles, in which two heating wires (4) provided with electrical connections are arranged along a hose wall (5) of the hose (1) and are completely moulded into the hose wall (5), the hose (1) being connectable at its one end to the water pump and being connectable at its other end to the spray nozzles of the washer unit, **characterized in that** the heating wires (4) exposed at the front hose end (11) are combined to form a loop (9), coated with the same plastic material and shaped to give a heating rod (13) which can be inserted into a two-part nozzle body (14, 15).

## Revendications

1. Flexible de lave-glace de véhicule automobile susceptible d'être chauffé électriquement, dans lequel deux fils chauffants (4) munis de connexions de raccordement électriques, disposés dans le sens de la longueur de la paroi (5) du flexible, sont intégralement noyés dans la paroi (5) du flexible, le flexible (1) étant en l'occurrence destiné à être raccordé, à une de ses extrémités, à la pompe à eau et à son autre extrémité aux buses de projection du lave-glace, **caractérisé en ce que** les fils chauffants (4), dénudés au niveau de l'extrémité antérieure (11) du flexible, sont reliés ensemble pour former une boucle (9), sont enrobés par injection dans la même matière plastique et constituent ainsi une résistance chauffante sous gaine étanche qui peut être placée dans un corps de buse de projection en deux parties (14, 15).
